# EUROPEAN PATENT APPLICATION

(11) **EP 4 155 959 A1**
(43) Date of publication of application: **29.03.2023**
(21) Application number: 22188513.0
(22) Date of filing: 03.08.2022
(51) Int. Cl.: G06F 15/78, G06F 15/80, G06N 3/063

(54) **EMBEDDED PROGRAMMABLE LOGIC DEVICE FOR ACCELERATION IN DEEP LEARNING-FOCUSED PROCESSORS**

(30) Priority: 24.09.2021 US 202117484439
(71) Applicant: INTEL Corporation, Santa Clara, CA 95054 (US)
(72) Inventor: NAGARAJ, Dheemanth, 560017 Bangalore KA (IN); SUBBAREDDY, Dheeraj, Portland OR, 97229 (US); THAKUR, Anshuman, Beaverton OR, 97007 (US); VIVEKANANDHAM, Rajesh, 560017 Bagalore KA (IN); HOSSAIN, MD, Portland OR, 97229 (US); KUMASHIKAR, Mahesh, 560066 Bangalore KA (IN); MAHESHWARI, Atul, Portland OR, 97229 (US); NALAMALPU, Ankireddy, Portland OR, 97229 (US); DEGALAHAL, Vijay S R, 560029 Bangalore DL (IN)
(74) Representative: Viering, Jentschura & Partner mbB Patent- und Rechtsanwälte

(57) **Abstract**

Processors may be enhanced by embedding programmable logic devices, such as field-programmable gate arrays. For instance, an application-specific integrated circuit device may include main fixed function circuitry operable to perform a main fixed function of the application-specific integrated circuit device. The application-specific integrated circuit also includes a support processor that performs operations outside of the main fixed function of the application-specific integrated circuit device, wherein the support processor comprises an embedded programmable fabric to provide programmable flexibility to application-specific integrated circuit device.

## Description

### Background

This disclosure relates to embedded or near-compute programmable logic devices. Specifically, the disclosure is directed to embedding programmable logic devices in or near deep learning-focused processors.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be noted that these statements are to be read in this light, and not as admissions of any kind.

Integrated circuits are found in numerous electronic devices, from handheld devices, computers, gaming systems, robotic devices, automobiles, and more. Some integrated circuits, such as application-specific integrated circuits (ASICs) and graphics processing units (GPUs), may perform deep learning processing. ASICs may have support processors that perform support processes, but the demands and networks using the ASIC may change faster than the design and production of the ASICs. This may be especially true in ASICs used to perform deep learning processes. Accordingly, the ASICs lagging behind network evolution can result in sub-optimal utilization of a primary systolic compute units due to bottlenecks in these support functions. Similarly, other processors (e.g., GPUs) with systolic arrays optimized for deep learning may also lack flexibility to accommodate new support functions over time.

### Brief Description of the Drawings

Various aspects of this disclosure may be better understood upon reading the following detailed description and upon reference to the drawings in which:
FIG. 1 is a block diagram of a process for programming an integrated circuit including a programmable fabric, in accordance with an embodiment;
FIG. 2 is a diagram of the programmable fabric of FIG. 1, in accordance with an embodiment;
FIG. 3 is a diagram of an application-specific integrated circuit device using embedded programmable logic (e.g., FPGAs), in accordance with an embodiment;
FIG. 4 is a diagram of an embedded programmable logic near a memory controller, in accordance with an embodiment;
FIG. 5 is a diagram of a processor with an embedded programmable fabric on a different die than the processor, in accordance with an alternative embodiment; and
FIG. 6 is a block diagram of a data processing system including a processor with an integrated programmable fabric unit, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "including" and "having" are intended to be inclusive and mean that there may be additional elements other than the listed elements. Additionally, it should be understood that references to "some embodiments," "embodiments," "one embodiment," or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B. Moreover, this disclosure describes various data structures, such as instructions for an instruction set architecture. These are described as having certain domains (e.g., fields) and corresponding numbers of bits. However, it should be understood that these domains and sizes in bits are meant as examples and are not intended to be exclusive. Indeed, the data structures (e.g., instructions) of this disclosure may take any suitable form.

As discussed above, processors may be used for deep learning applications. For example, application specific integrated circuits (ASICs) may have deep learning (DL) ASIC architecture. The DL ASIC architecture planning uses support units (e.g., tensor cores) to compute the various operations other than the primary multiply circuitry, such as general matrix multiply (GEMM) circuitry or a general matrix vector multiplication (GEMV) circuitry (e.g., transcendental activations). These support units are generally smaller support processors. The optimal balance of these units changes over time as the state-of-the-art networks evolve faster than typical ASICs. This results in sub-optimal utilization of the primary systolic compute units due to bottlenecks in these support functions. Additionally, graphics processing units GPUs with systolic arrays optimized for deep learning also require similar flexibility to accommodate new support functions over time. Furthermore, near-memory computes are enhanced using flexible logic to flexibly satisfy different word-line specific optimizations. Thus, embedding a programmable logic device (e.g., a field programmable gate array (FPGA)) may enhance the flexibility and/or efficiency of an DL-focused ASIC, a GPU with systolic arrays used to perform DL operations, and near-memory computes used for DL operations.

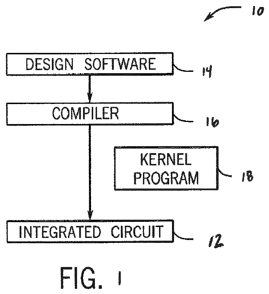

With the foregoing in mind, an integrated circuit may utilize one or more programmable fabrics (e.g., FPGAs). With the foregoing in mind, FIG. 1 illustrates a block diagram of a system 10 used to configure a programmable device. A designer may implement functionality on an integrated circuit, such as an integrated circuit 12 that includes some reconfigurable circuitry, such as an FPGA. A designer may implement a circuit design to be programmed onto the integrated circuit 12 using design software 14, such as a version of Quartus by Altera^{™}. The design software 14 may use a compiler 16 to generate a low-level circuit-design, which may be provided as a kernel program 18, sometimes known as a program object file or bitstream, that programs the integrated circuit 12. That is, the compiler 16 may provide machine-readable instructions representative of the circuit design to the integrated circuit 12.

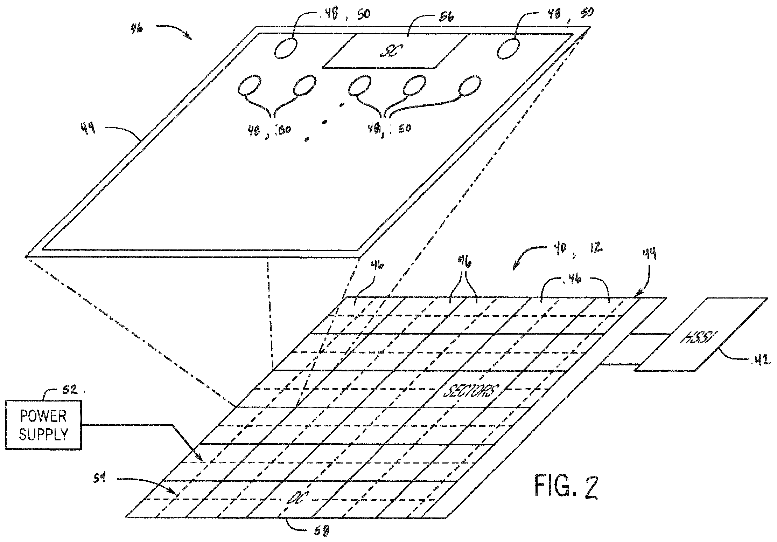

The integrated circuit 12 may include any programmable logic device, such as a field programmable gate array (FPGA) 40, as shown in FIG. 2. For the purposes of this example, the FPGA 40 is referred to as an FPGA, though it should be understood that the device may be any suitable type of programmable logic device (e.g., an application-specific integrated circuit and/or application-specific standard product). In one example, the FPGA 40 is a sectorized FPGA of the type described in U.S. Patent Publication No. 2016/0049941, "Programmable Circuit Having Multiple Sectors," which is incorporated by reference in its entirety for all purposes. The FPGA 40 may be formed on a single plane. Additionally or alternatively, the FPGA 40 may be a three-dimensional FPGA having a base die and a fabric die of the type described in U.S. Patent No. 10,833,679, "Multi-purpose Interface for Configuration Data and User Fabric Data," which is incorporated by reference in its entirety for all purposes.

In the example of FIG. 2, the FPGA 40 may include transceiver 42 that may include and/or use input-output circuitry for driving signals off the FPGA 40 and for receiving signals from other devices. Interconnection resources 44 may be used to route signals, such as clock or data signals, through the FPGA 40. The FPGA 40 of FIG. 2 is sectorized, meaning that programmable logic resources may be distributed through a number of discrete programmable logic sectors 46. Each programmable logic sector 46 may include a number of programmable logic elements 48 having operations defined by configuration memory 50 (e.g., configuration random access memory (CRAM)). The programmable logic elements 48 may include combinational or sequential logic circuitry. For example, the programmable logic elements 48 may include look-up tables, registers, multiplexers, routing wires, and so forth. A designer may program the programmable logic elements 48 to perform a variety of desired functions. A power supply 52 may provide a source of voltage and current to a power distribution network (PDN) 54 that distributes electrical power to the various components of the FPGA 40. Operating the circuitry of the FPGA 40 causes power to be drawn from the power distribution network 54.

There may be any suitable number of programmable logic sectors 46 on the FPGA 40. Indeed, while 29 programmable logic sectors 46 are shown here, it should be appreciated that more or fewer may appear in an actual implementation (e.g., in some cases, on the order of 50, 100, 500, 1000, 5000, 10,000, 50,000, or 100,000 sectors or more). Each programmable logic sector 46 may include a sector controller (SC) 56 that controls the operation of the programmable logic sector 46. Each sector controller 56 may be in communication with a device controller (DC) 58. Each sector controller 56 may accept commands and data from the device controller 58 and may read data from and write data into its configuration memory 50 based on control signals from the device controller 58. In addition to these operations, the sector controller 56 may be augmented with numerous additional capabilities. For example, such capabilities may include locally sequencing reads and writes to implement error detection and correction on the configuration memory 50 and sequencing test control signals to effect various test modes.

The sector controllers 56 and the device controller 58 may be implemented as state machines and/or processors. For example, each operation of the sector controllers 56 or the device controller 58 may be implemented as a separate routine in a memory containing a control program. This control program memory may be fixed in a read-only memory (ROM) or stored in a writable memory, such as random-access memory (RAM). The ROM may have a size larger than would be used to store only one copy of each routine. This may allow each routine to have multiple variants depending on "modes" the local controller may be placed into. When the control program memory is implemented as random access memory (RAM), the RAM may be written with new routines to implement new operations and functionality into the programmable logic sectors 46. This may provide usable extensibility in an efficient and easily understood way. This may be useful because new commands could bring about large amounts of local activity within the sector at the expense of only a small amount of communication between the device controller 58 and the sector controllers 56.

Each sector controller 56 thus may communicate with the device controller 58, which may coordinate the operations of the sector controllers 56 and convey commands initiated from outside the FPGA device 40. To support this communication, the interconnection resources 44 may act as a network between the device controller 58 and each sector controller 56. The interconnection resources may support a wide variety of signals between the device controller 58 and each sector controller 56. In one example, these signals may be transmitted as communication packets.

The FPGA 40 may be electrically programmed. With electrical programming arrangements, the programmable elements 48 may include one or more logic elements (wires, gates, registers, etc.). For example, during programming, configuration data is loaded into the configuration memory 50 using pins and input/output circuitry. In one example, the configuration memory 50 may be implemented as configuration random-access-memory (CRAM) cells. As discussed below, in some embodiments, the configuration data may be loaded into the FPGA 40 using an update to microcode of the processor in which the FPGA 40 is embedded. The use of configuration memory 50 based on RAM technology is described herein is intended to be only one example. Moreover, configuration memory 50 may be distributed (e.g., as RAM cells) throughout the various programmable logic sectors 46 the FPGA 40. The configuration memory 50 may provide a corresponding static control output signal that controls the state of an associated programmable logic element 48 or programmable component of the interconnection resources 44. The output signals of the configuration memory 50 may be applied to the gates of metal-oxide-semiconductor (MOS) transistors that control the states of the programmable logic elements 48 or programmable components of the interconnection resources 44.

The sector controllers 56 and/or the device controller 58 may determine when each sector controller 56 performs a CRAM read operation on the configuration memory 50 of its programmable logic sector 46. Each time the sector controller 56 performs a CRAM read of the configuration memory 50, power is drawn from the power distribution network 54. If too much power is drawn from the power distribution network 54 at any one time, the voltage provided by the power distribution network 54 could drop to an unacceptably low level, or too much noise could arise on the power distribution network 54. To avoid this, the device controller 58 and/or the sector controllers 56 may structure CRAM reads of the programmable logic sectors 46 to avoid excessive instantaneous power consumption by temporally and/or spatially distributing the CRAM reads across different programmable logic sectors 46.

The sector controller 56 of the programmable logic sector 46 is shown to read and write to the configuration memory 50 by providing an ADDRESS signal to an address register and providing a memory write signal (WRITE), a memory read signal (RD DATA), and/or the data to be written (WR DATA) to a data register. These signals may be used to cause the data register to write data to or read data from a line of configuration memory 50 that has been activated along an address line, as provided by the ADDRESS signal applied to the address register. Memory read/write circuitry may be used to write data into the activated configuration memory 50 cells when the data register is writing data and may be used to sense and read data from the activated configuration memory 50 cells when the data register is reading data.

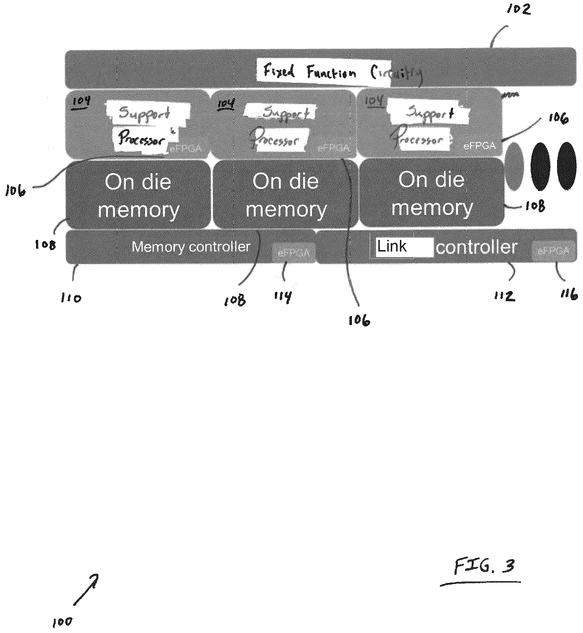

FIG. 3 shows a block diagram of an ASIC device 100. The ASIC device 100 includes fixed function circuitry 102 that perform various functions for deep learning (DL). The fixed function circuitry 102 may include a general matrix multiply (GEMM) and/or a general matrix vector multiplication (GEMV) primitives. The ASIC device 100 also includes one or more support processors 104 that are used to compute various operations other than the fixed function primitives (e.g., transcendental activations). The support processors 104 may include tensor cores or the like. The balance of the support processors 104 with the fixed function may change over time as networks performing DL may evolve faster than the ASIC device 100 can evolve resulting in sub-optimal utilization of the primary systolic compute units due to bottlenecks in these support functions.

To add flexibility to the ASIC device 100 and/or the support processors 104, the support processors may include an embedded FPGA 106 or other programmable logic device. Tight integration of the programmable fabric of the embedded FPGA 106 along with the support cores 104 and the fixed function circuitry 102 allows for the ASIC device 100 to evolve with the state-of-the-art networks by leveraging the configurability of the programmable fabric without waiting for new hardware designs for the fixed function circuitry 102 and/or the support processors 104.

Depending on the application, the configuration of the programmable fabric may be changed depending upon the workload requirements. The programmable fabric may be optimized for the usage ahead of the ASIC evolution that may take time to design and manufacture a new ASIC device. Indeed, the programmable fabric may be changed over time as the network evolves. The programmable fabric may be streamlined for DL with choice points on granularity of configuration and/or balance of DSPs, memory and programmable logic.

The ASIC device 100 also includes one or more on die memory 108 along with a related memory controller 110. Additionally or alternatively, the ASIC device 100 may also include a link controller 112 to control one or more programmable links between multiple compute units. The memory controller 110 may include an embedded FPGA 114. The embedded FPGA 114 may be used to address different near-memory computes with the programmable fabric of the embedded FPGA 114. Addressing different near-memory compute with flexible programmable fabric may reduce memory traffic for some patterns like zero initialization. Memory-dependent instruction executions may be moved near/within the memory controller 110 via the embedded FPGA 114. The embedded FPGA 114 may perform memory scrubbing algorithms and may implement (row address strobe) RAS and/or complex checksum algorithms. The embedded FPGA 114 can implement memory zeroing, memory setting, and/or arithmetic operations without double-data rate (DDR) transactions leading to power savings/performance increases along with DRAM latency. For deep learning and analytics applications, the embedded FPGA 114 can be programmed to perform reductions and similar operations near memory without paying the power tax of moving the data all the way to a compute unit.

The link controller 112 may similarly utilize an embedded FGPA 116 to add programmability to the link controller 112 either in the link controller 112 and/or as a near compute. Furthermore, the link controller 112 may be used to scale out links used in deep learning training contexts where multiple compute units (e.g., deep-learning focuses ASICs/GPU, etc.) communicate with each other using a bespoke communication link. The programmable link controlled by the link controller 112 may be used to communicate between multiple compute units. For instance, the fabric may include a X^{e} Link from Intel that is used to facilitate communications between GPUs.

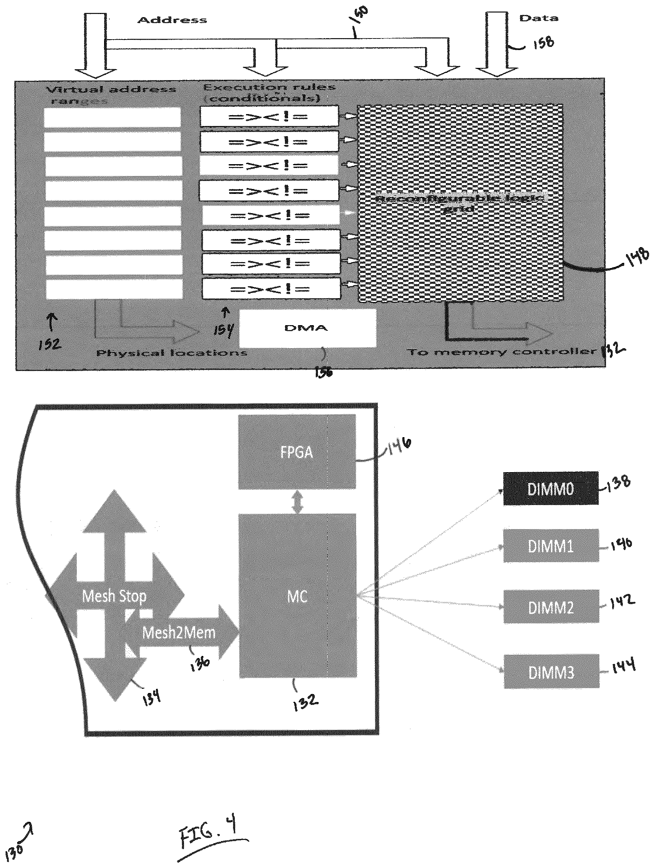

Although the embedded FPGAs 106, 114, and 116 are shown within the respective support processors 104, the memory controller 110, and the link controller 112, as used herein "embedded" means near or in the respective device in which it is embedded. For example, in a system 130 of FIG. 4, an embedded FPGA 146 is near a memory controller 132. In other words, the embedded FPGA 146 is located near the memory controller 132 without being in the memory controller 132 but has access to internal functions of the memory controller The memory controller 132 may be incorporated in a larger device that includes a mesh 134. A bus 136 to a node of the mesh 134 may be used to couple the memory controller 132 to a mesh of devices. The memory controller 132 may also couple to memories 138, 140, 142, and 144 and may be used to control the memories. To aid in the memory control, the embedded FPGA 146 may be used to compute at least some operations without additional memory calls or sending data to another compute that is farther from the memory controller 132. For instance, a programmable fabric 148 of the embedded FPGA 146 may receive an address 150. The address 150 may be in a virtual address space in one or more virtual address ranges 152 that may have one or more execution rules (conditionals) 154 applied to the respective virtual address ranges to determine a physical address. The physical address is used by a direct memory access (DMA) engine 156 to perform respective DMA actions at the respective physical address(es). These physical addresses (along with the address 150) and corresponding data 158 may all be received by the programmable fabric 148. The data 158 and/or addresses 150 may be manipulated before being sent to the memory controller 132. For example, the data 158 may be converted from a first layer of a neural network to a second layer of a neural network at least partially implemented using an ASIC or GPU with a memory controller 132 with an embedded FPGA 146. For instance, the embedded FPGA 146 may be used to perform reductions of data and similar operations near memory without moving the data 158 to a farther compute unit. Additionally or alternatively, the embedded FPGA 146 may be used to zero out data at the memory address.

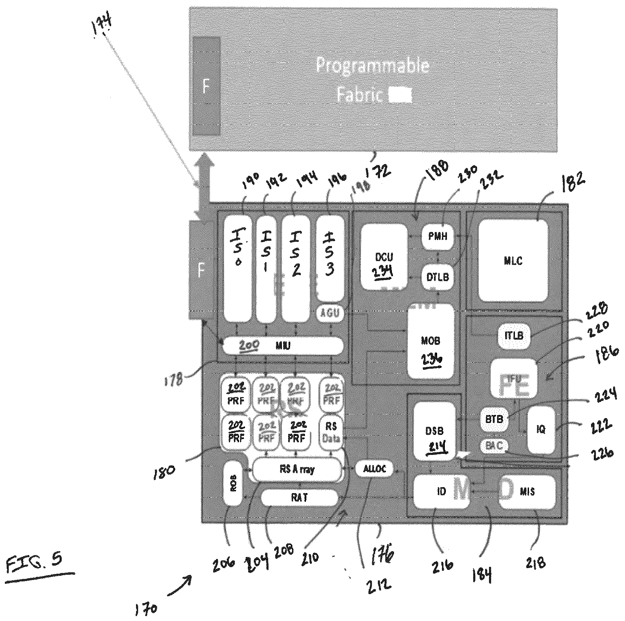

As previously noted, the embedded FPGA may be outside of the device in which it is embedded. Indeed, in some embodiments, the embedded FPGA may be on a different die that the device (e.g., processor or ASIC) in which it is embedded. For instance, FIG. 5 shows a block diagram of a processor 170 that has an embedded programmable fabric 172. The embedded programmable fabric 172 and the processor 170 may be on different die using a die-to-die interconnect 174. In some embodiments, the die-to-die interconnect 174 may be a three-dimensional die-to-die interconnect with the die of the embedded programmable fabric 172 placed above the die of the processor 170 or vice versa.

Although the processor 170 is shown using the illustrated components, any suitable processor may utilize the embedded programmable fabric 172. For instance, the processor 170 may be a deep learning inference or training ASIC, a GPU, a CPU, or any other processors that would benefit from the embedded programmable fabric 172.

The illustrated processor 170 includes an out-of-order core 176, execution circuitry 178, memory circuitry 180, a multi-level cache 182, MSID circuitry 184, and front-end circuitry 186.

The execution circuitry 178 includes one or more instruction set architectures 190, 192, 194, and 196 along with an address generation unit (AGU) 198 that calculates addresses used by the processor to access main memory. The execution circuitry 178 also includes a memory interface unit 200 that may be used to interface with the embedded programmable fabric 172.

The processor 170 also includes one or more prefetchers 202. Prefetchers may have programmable strides based on wordline. Arithmetic operations may be performed on loaded data to fetch new data. The embedded programmable fabric 172 maybe used to implement prefetching hints and/or algorithms to individual workloads.

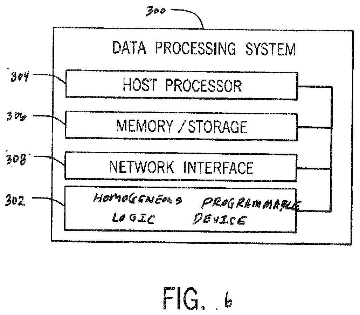

Bearing the foregoing in mind, a processor and one or more embedded programmable fabrics may be integrated into a data processing system or may be a component included in a data processing system, such as a data processing system 300, shown in FIG. 6. The data processing system 300 may include a host processor 304, memory and/or storage circuitry 306, and a network interface 308. The data processing system 300 may include more or fewer components (e.g., electronic display, user interface structures, application specific integrated circuits (ASICs)). The host processor 304 may include any of the foregoing processors that may manage a data processing request for the data processing system 300 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 306 may include random access memory (RAM), read-only memory (ROM), one or more hard drives, flash memory, or the like. The memory and/or storage circuitry 306 may hold data to be processed by the data processing system 300. In some cases, the memory and/or storage circuitry 306 may also store configuration programs (bitstreams) for programming the homogeneous programmable logic device 302. The network interface 308 may allow the data processing system 300 to communicate with other electronic devices. The data processing system 300 may include several different packages or may be contained within a single package on a single package substrate. For example, components of the data processing system 300 may be located on several different packages at one location (e.g., a data center) or multiple locations. For instance, components of the data processing system 300 may be located in separate geographic locations or areas, such as cities, states, or countries.

In one example, the data processing system 300 may be part of a data center that processes a variety of different requests. For instance, the data processing system 300 may receive a data processing request via the network interface 308 to perform encryption, decryption, machine learning, video processing, voice recognition, image recognition, data compression, database search ranking, bioinformatics, network security pattern identification, spatial navigation, digital signal processing, or some other specialized task.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS

EXAMPLE EMBODIMENT 1. An application-specific integrated circuit device comprising:
main fixed function circuitry operable to perform a main fixed function of the application-specific integrated circuit device; and
a support processor that performs operations outside of the main fixed function of the application-specific integrated circuit device, wherein the support processor comprises an embedded programmable fabric to provide programmable flexibility to application-specific integrated circuit device.

EXAMPLE EMBODIMENT 2. The application-specific integrated circuit device of example embodiment 1, wherein the main fixed function comprises matrix multiplication.

EXAMPLE EMBODIMENT 3. The application-specific integrated circuit device of example embodiment 2, wherein the main fixed function circuitry comprises general matrix multiply circuitry.

EXAMPLE EMBODIMENT 4. The application-specific integrated circuit device of example embodiment 2, wherein the main fixed function circuitry comprises general matrix vector multiply circuitry.

EXAMPLE EMBODIMENT 5. The application-specific integrated circuit device of example embodiment 1, comprising memory.

EXAMPLE EMBODIMENT 6. The application-specific integrated circuit device of example embodiment 5, comprising a memory controller that controls the memory.

EXAMPLE EMBODIMENT 7. The application-specific integrated circuit device of example embodiment 6, wherein the memory controller comprises a memory controller-embedded programmable fabric.

EXAMPLE EMBODIMENT 8. The application-specific integrated circuit device of example embodiment 7, wherein the memory controller-embedded programmable fabric is physically outside of the memory controller but has access to internal functions of the memory controller.

EXAMPLE EMBODIMENT 9. The application-specific integrated circuit device of example embodiment 1, wherein the support processor comprises a tensor core.

EXAMPLE EMBODIMENT 10. The application-specific integrated circuit device of example embodiment 1 comprising a memory controller.

EXAMPLE EMBODIMENT 11. The application-specific integrated circuit device of example embodiment 10, wherein the memory controller comprises an additional embedded programmable fabric.

EXAMPLE EMBODIMENT 12. The application-specific integrated circuit device of example embodiment 11, wherein the embedded programmable fabric is configured to manipulate memory between stages of a neural network used to perform deep learning operations.

EXAMPLE EMBODIMENT 13. The application-specific integrated circuit device of example embodiment 11, wherein the embedded programmable fabric is configured to at least partially perform memory zeroing operations.

EXAMPLE EMBODIMENT 14. The application-specific integrated circuit device of example embodiment 11, wherein the embedded programmable fabric is configured to at least partially perform memory setting or other arithmetic operations.

EXAMPLE EMBODIMENT 15. The application-specific integrated circuit device of example embodiment 1 comprising a plurality of support processors including the support processor.

EXAMPLE EMBODIMENT 16. The application-specific integrated circuit device of example embodiment 15, wherein at least one other support processor of the plurality of support processors comprises an embedded programmable fabric.

EXAMPLE EMBODIMENT 17. A method comprising:
performing a main fixed function in main fixed function circuitry of an application-specific integrated circuit device;
performing operations outside of the main fixed function of the application-specific integrated circuit device in a support processor; and
performing a subset of the operations outside of the main fixed function using an embedded programmable fabric embedded in the support processor to provide programmable flexibility to the application-specific integrated circuit device.

EXAMPLE EMBODIMENT 18. The method of example embodiment 17, wherein the subset of the operations comprises memory manipulation between layers of a neural network performing deep learning operations.

EXAMPLE EMBODIMENT 19. A system comprising:
a memory controller comprising an embedded programmable fabric, wherein the embedded programmable fabric is configured to perform memory manipulation between layers of a neural network performing deep learning operations; and
a processor comprising a systolic array and a processor-embedded programmable fabric, wherein the processor-embedded programmable fabric is configured to enhance deep learning operations using the system.

EXAMPLE EMBODIMENT 20. The system of example embodiment 19, wherein the processor comprises a graphics processing unit.

## Claims

1. An application-specific integrated circuit device comprising:
main fixed function circuitry operable to perform a main fixed function of the application-specific integrated circuit device; and
a support processor that performs operations outside of the main fixed function of the application-specific integrated circuit device, wherein the support processor comprises an embedded programmable fabric to provide programmable flexibility to application-specific integrated circuit device.

2. The application-specific integrated circuit device of claim 1,
wherein the main fixed function comprises matrix multiplication;
wherein preferably the main fixed function circuitry comprises general matrix multiply circuitry.

3. The application-specific integrated circuit device of claim 2, wherein the main fixed function circuitry comprises general matrix vector multiply circuitry.

4. The application-specific integrated circuit device of any one of claims 1 to 3, further comprising memory.

5. The application-specific integrated circuit device of claim 4,
further comprising a memory controller that controls the memory.

6. The application-specific integrated circuit device of claim 5,
wherein the memory controller comprises a memory controller-embedded programmable fabric;
wherein preferably the memory controller-embedded programmable fabric is physically outside of the memory controller but has access to internal functions of the memory controller.

7. The application-specific integrated circuit device of any one of claims 1 to 6, wherein the support processor comprises a tensor core.

8. The application-specific integrated circuit device of any one of claims 1 to 7, further comprising a memory controller.

9. The application-specific integrated circuit device of claim 8,
wherein the memory controller comprises an additional embedded programmable fabric.

10. The application-specific integrated circuit device of claim 9,
wherein the embedded programmable fabric is configured to manipulate memory between stages of a neural network used to perform deep learning operations.

11. The application-specific integrated circuit device of any one of claims 9 or 10,
wherein the embedded programmable fabric is configured to at least partially perform memory zeroing operations.

12. The application-specific integrated circuit device of any one of claims 9 to 11,
wherein the embedded programmable fabric is configured to at least partially perform memory setting or other arithmetic operations.

13. The application-specific integrated circuit device of any one of claims 1 to 12,
further comprising a plurality of support processors including the support processor;
wherein preferably at least one other support processor of the plurality of support processors comprises an embedded programmable fabric.

14. A method comprising:
performing a main fixed function in main fixed function circuitry of an application-specific integrated circuit device;
performing operations outside of the main fixed function of the application-specific integrated circuit device in a support processor; and
performing a subset of the operations outside of the main fixed function using an embedded programmable fabric embedded in the support processor to provide programmable flexibility to the application-specific integrated circuit device.

15. The method of claim 14,
wherein the subset of the operations comprises memory manipulation between layers or in a layer of a neural network performing deep learning operations.
